# EUROPÄISCHE PATENTANMELDUNG

(11) **EP 1 772 381 A1**
(43) Veröffentlichungstag der Anmeldung: **11.04.2007**
(21) Anmeldenummer: 06020376.7
(22) Anmeldetag: 28.09.2006
(51) Int. Cl.: B65B 9/20, B29C 65/08, B65B 51/22

(54) **Verfahren und Vorrichtung zum Verschliessen von Kunststoffbeuteln**

(30) Priorität: 04.10.2005 DE 102005047507
(71) Anmelder: H.E.T. - ANKE Filtertechnik GmbH, 63674 Altenstadt (DE); EM Systeme GmbH, 46149 Oberhausen (DE)
(72) Erfinder: Hoenigs, Michael, 50678 Köln (DE); Keppel, Jürgen, 46049 Oberhausen (DE)
(74) Vertreter: Müller-Wolff, Thomas

(57) **Zusammenfassung**

Die Erfindung betrifft ein Verfahren zum Verschließen von Beuteln - insbesondere zum Verschließen von einseitig geschlossenen, mit staubförmigem, sensibelem Gut befüllten Kunststofffolienschläuchen. Das offene Ende des Beutels soll mindestens auf der Beutelinnenseite eine umlaufende Beschichtung aus thermoplastischem Kunststoff aufweisen, so dass zunächst das offene Ende des Beutels zu einem locker liegenden Verschlussbereich gerafft und anschließend durch Vorformung im Bereich der Raffung, vorzugsweise durch Heißpressen und/oder Verwendung von Ultraschall, mindestens ein formstabiler, zugspannungsentlastender Verschlussereich erzeugt werden kann. Dann wird im zugspannungsentlasteten Verschlussberelch unter Plastifizierung des thermoplastischen Kunststoffs, vorzugsweise durch Ultraschallschweißen, der Beutel versiegelt und abschließend abgetrennt.

## Beschreibung

Die Erfindung betrifft ein Verfahren und eine Vorrichtung zum Verschließen von Beuteln. Insbesondere bezieht sich die Erfindung auf ein Verfahren zum Verschließen von mit sensibelem Gut befüllten Beuteln. Sensibel bedeutet hierbei, dass das Gut ein hohes Gefährdungspotential besitzt bzw. entwickeln kann und/oder nicht haltbar ist weil es außerhalb des Beutels in seine Bestandteile zerfällt bzw. sich in der Luft oder in feuchter Atmosphäre zersetzt.

### Stand der Technik

In industriellen Großanlagen werden Güter wie z. B, staubförmige Verunreinigungen oder partikuläre Granulate üblicherweise in Beuteln gesammelt und anschließend weiter verarbeitet. Häufig handelt es sich bei diesen Beuteln um Kunststoffbeutel, die von einem fortlaufenden, thermoplastischen Schlauch wie folgt abgetrennt werden:

Ein Vorrat an thermoplastischem Schlauch wird vertikal vorgelegt, das untere Ende wird verschlossen und der Schlauch wird gefüllt. Erreicht das Gut die angestrebte Füllhöhe - üblicherweise kurz unterhalb des Befüllstutzens -, so wird der Schlauch oberhalb des Gutes verschlossen, der befüllte Beutel wird vom übrigen Schlauch getrennt und entnommen. Anschließend wird ein weiteres Segment des endlosen Schlauches abgezogen, am unteren Ende verschlossen und von oben befüllt. Bei der Verarbeitung von Produkten mit hoher Wertschöpfung oder hohem Gefährdungspotential wie z. B. feinen und feinsten Stäuben ist ein stabiler, dichter Verschluss notwendig.

In der E.P 1 176 096 werden mehrere Verfahren und Vorrichtungen zum Verschließen von parallel zu einer Fläche ausgerichteten Beuteln beschrieben. Hierbei wird der Beutel parallel zu seiner unteren Quernaht glatt gezogen und thermisch oder mit Ultraschall verschlossen. Die zum thermischen Verschweißen verwendeten Schweißbacken erstrecken sich über die gesamte Breite des Beutels und sind beheizt. Die Temperatur der Schweißbacken ist so gewählt, dass die Kunststofffolie während des Pressvorgangs plastifiziert und damit luftdicht versiegelt wird, Alternativ erfolgt das Versiegeln des Beutels mit Hilfe einer Sonotrode, die mittels Ultraschall eine definierte, glatte Quernaht durch Plastifizierung des Kunststoffs erzeugt.

Die bekannten Verfahren können jedoch nicht das Freisetzen von Gut während und nach dem Verschließen vollständig vermeiden. Sind während des Verschließens Teile des Guts oder Verunreinigungen im Bereich der zu erzeugenden Schweißnaht vorhanden, so entsteht ein inhomogener Verschlussbereich, der bei Belastung ausreißen kann. Ungünstigsten Falls kommt es bereits während des Verschließens bzw. des nachfolgenden Abtrennens des Beutels zur Freisetzung von Gut.

Bei industriellen Prozessen, in denen größere Beutel mit einem Gut von hoher Dichte befüllt werden, erschwert das hohe Gewicht des Beutelinhalts zusätzlich das Erreichen eines ausreichend dichten Verschlusses. Zum einen verursacht die deutlich größere Länge der Naht einen hohen apparativen Aufwand, zum anderen begünstigt die höhere Dichte des Schüttguts das o. g. Ausreißen der Naht.

Die Erfinder haben nach Lösungen der aufgezeigten Problematik gesucht und als ersten Schritt Beutel vor dem Verschließen zumindest teilweise gerafft, um eine kürzere, einfacher herzustellende Naht und ein höheres, formstabileres Ausmaß an innig verbundener Kontaktfläche zu gewährleisten. Die Raffung des vollen Beutels ist jedoch mit dem Erzeugen einer seitlichen Zugspannung verbunden. Des Weiteren ergeben sich im Bereich der Raffung unregelmäßige Materialverteilungen und Lufteinschlüsse. Diese führen bei einem Sonotrodenschnitt unter vollständiger Plastifizierung zum lokalen Ausgasen sowie Aufreißen des Beutels nahe der Naht bzw. zu einer Schwächung des Materials während des Abtrennens und Versiegelns, Die so erzeugte Naht unterliegt der erwähnten Zugspannung und neigt daher verstärkt zum Ausreißen. Alternativ wurde versucht, das geraffte Beutelsegment thermisch zu versiegeln. Eine effektive, maschinelle, koordinatengesteuerte Versiegelung ist hier jedoch nicht möglich, da die Raffung der Kunststofffolie nicht wiederholbar zur gleichen Verteilungsdichte von Material führt. Das Heizelementschweißen musste daher manuell ausgeführt werden, war zeit- sowie personalintensiv und gelang erst mit ausreichender Erfahrung bzw. Ausbildung. Nach Beobachtung der Erfinder kommt es jedoch häufig bei letzterem Verfahren zur lokalen Erwärmung sowie Plastifizierung und ein Aufreißen des Beutels ist an dieser Stelle durch die inhomogene Struktur der Versiegelung zu befürchten.

### Aufgabe der Erfindung

Aufgabe der vorliegenden Erfindung ist es daher, die eingangs beschriebenen Nachteile der bekannten Verfahren zu vermeiden und ein sicheres und umweltfreundliches Verschließverfahren für Beutel, insbesondere für schlauchförmig ausgebildete Beutel, die mit sensibelem Gut befüllt sind, bereit zu stellen und eine Vorrichtung hierzu anzubieten, welche in bestehende, etablierte Anlagen ohne Schwierigkeiten integriert werden kann und die oben beschriebenen Nachteile aufhebt.

### Lösung und erfindungsgemäßes Verfahren

Die erfindungsgemäße Lösung der Aufgabe erfolgt durch ein Verfahren gemäß Patentanspruch 1 bzw. 2 und durch eine Vorrichtung gemäß Patentanspruch 15. Vorteilhafte Weiterentwicklungen des Verfahrens bzw, der Vorrichtung ergeben sich aus der folgenden Beschreibung sowie den abhängigen Patentansprüchen.

Das erfindungsgemäße Verfahren befasst sich mit dem Verschließen von einseitig geschlossenen, mit staubförmigem, sensibelem Gut befüllten Kunststofffolienschläuchen, wobei zumindest das offene Ende mindestens auf der Innenseite eine umlaufende Beschichtung aus thermoplastischem Kunststoff aufweist. Um daraus einen Beutel herzustellen wird zunächst das offene Ende des Schlauches zu einem locker liegenden Verschlussbereich gerafft. Anschließend wird eine Verformung im Bereich der Raffung unter Erweichung des thermoplastischen Kunststoffes durch Heißpressen vorgenommen, wobei mindestens ein formstabiler, zugspannungsentlastender Verschlussbereich erzeugt wird. Dann wird im zugspannungsentlasteten Verschlussbereich unter Plastifizierung des thermoplastischen Kunststoffs entlang einer Trennlinie durch Ultraschallschweißen der Beutel versiegelt und abschließend abgetrennt. Durch die Plastifizierung wird dort befindliches, staubförmiges Material eingeschmolzen und fest innerhalb des Kunststoffgefüges eingebunden.

Alternativ kann das Verfahren zum Verschließen von einseitig geschlossenen, mit staubförmigem, sensibelem Gut befüllten Kunststofffolienschläuchen dadurch ausgeführt werden, dass das offene Ende mindestens auf der Innenseite eine umlaufende Beschichtung aus thermoplastischem Kunststoff erhält, um daraus einen Beutel herzustellen und dann das offene Ende des Schlauches zu einem locker liegenden Verschlussbereich gerafft wird. Anschließend wird durch Vorformung im Bereich der Raffung unter Erweichung des thermoplastischen Kunststoffes mittels Ultraschall mindestens ein formstabiler, zugspannungsentlastender Verschlussbereich erzeugt und im zugspannungsentlasteten Verschlussbereich unter Plastifizierung des thermoplastischen Kunststoffs entlang einer Trennlinie durch Ultraschallschweißen der Beutel versiegelt. Abschließend wird er abgetrennt wird und durch die Plastifizierung dort befindliches, staubförmiges Material eingeschmolzen und fest innerhalb des Kunststoffgefüges eingebunden.

Vorteilhafter Welse erfolgt das Raffen des Beutels durch seitlich aufgebrachten Druck, dessen Größe in Abhängigkeit von der Foliendicke und der Beutelgröße eingestellt wird.

Erfindungswesentlich ist, dass das Ratten in zugentlastender Weise durchgeführt wird, wobei zur Zugentlastung während der Raffung außerhalb des Raffbereichs zumindest während des Verfahrens das Beutelmaterial durch eine konzentrisch eingeengte Vorrichtung, vorzugsweise einen Kabelbinder, gehalten wird.

Es ist vorteilhafter, wenn das Raffen eine gleichzeitige Verdrillung umfasst oder wenn das Raffen mit lokal variierter Raffkraft durchgeführt wird.

Zusätzlich kann das Raffen durch Anlegen eines Vakuums an das offene Ende Schlauchs erfolgen, wobei vorteilhafter Weise die Vorformung mit lokal variiertem Druck durchgeführt wird.

Sofern die Vorformung mit ansteigender Temperatur erfolgt sollte dies nach einem zonal geregelten Temperatur- und Druckprofil erfolgen.

Anhand von Versuchen wurde als vorteilhaft festgestellt, dass das Plastifizieren und Abtrennen des Beutels an einer Stelle der zugspannungsentlasteten Zone durchgeführt wird, die einen Abstand von mindestens 2 mm vom nicht vorgeformten Beutelmaterial aufweist und dass eine Ultraschaliplastlflzierung mit variierten Parametern, vorzugsweise variierter Amplitude, durchgeführt wird, wobei zweckmässiger Weise die Ultraschallplastifizierung eine Ausformung von den Verschluss stabilisierenden Versteifungsmilteln umfasst.

Eine erfindungsgemäße Vorrichtung zum Verschließen von einseitig geschlossenen, mit staubförmigem Gut befüllten Kunststofffolienschläuchen, deren offenes Ende mindestens auf der Beutelinnenseite mindestens eine Beschichtung aus thermoplastischem Kunststoff aufweist, umfasst mindestens einen Druckstempel (1) und mindestens eine Ultraschall-Sonotrode (2), die gegeneinander verfahrbar sind, wobei Halteelemente für das offene Beutelende sowie Mittel zur Raffung und Druckbeaufschlagung im Bereich zwischen Druckstempel (1) und Sonotrode (2) angeordnet sind, und wobei der Druckstempel ein negatives Abbild der Sonotrodenfläche aufweist. Der Druckstempel und/oder Ultraschall-Sonotrode (2) sollten eine austauschbare Oberfläche aufweisen. Ferner sollte die Vorrichtung mindestens eine Sonotroden-Amboss-Kombination umfassen, wobei die Sonotroden-Amboss-Kombination durch Austausch der Oberfläche des Druckstempels (1) und/oder der Ultraschall-Sonotrode(2) erhältlich ist. Bei einer vorteilhaften Weiterentwicklung der Erfindung wies mindestens ein Druckstempel (1) und auch die Sonotrode Mittel zur Temperaturregelung auf, wobei die Sonotrode (2) eine Trennleiste (3) als separate Baugruppe umfasst und Druckstempel, Trennleiste und Sonotrode separate Widerlager aufweisen, die jeweils gegen das geraffte Beutelsegment anpressbar sind.

Es ist ferner vorteilhaft, wenn die Druckstempel Mittel zur kontrollierten Druckbeaufschlagung und die Widerlager Mittel zur lokalen Temperaturregulierung aufweisen.

Die Erfindung betrifft ferner eine Vorrichtung zum Verschließen und Abtrennen von über einen Befüllstutzen mit Gut befüllbaren, einseitig geschlossenen, thermoplastischen Kunststofffolien-schläuchen, deren offenes Ende zusammen mit einem Schlauchvorrat oberhalb des Befüllstutzens fixiert ist. Die Vorrichtung weist mindestens zwei gegenüberliegend, seitlich am offenen Schlauchende angeordnete Formteile auf, von denen mindestens eines als Sonotrode (2) ausgebildet ist, von denen weiterhin mindestens ein Formteil eine austauschbare Oberfläche aufweist, mit Mitteln zur Druckbeaufschlagung, und mindestens eine Sonotroden-Amboss-Kombination umfasst, wobei die Sonotroden-Amboss-Kombination durch Austausch der Oberfläche eines Formteils erhältlich ist.

Nachfolgend sollen die 3 wesentlichen Schritte des erfiridungsgemäßen Verfahrens näher erläutert werden:
1. Raffen des oberen, offenen Sackabschnitts bzw. Beutelsegments bei Erreichen der Füllhöhe.
2. Vorformen - vorzugsweise Heiß- bzw. Ultraschallpressen - und Ausbilden eines formstabilen, zugspannungsentlastenden Verbindungsbereiches.
3. Erzeugung einer dichten Naht durch Trennen innerhalb des zugspannungsentlasteten Bereichs unter vollständiger Plastifizierung des Kunststoffs entlang der Trennlinie - vorzugsweise mit Hilfe einer Sonotrode.

Energiezufuhr und Druck werden im ersten Prozess so gewählt, dass der Erweichungsbereich des Materials gerade erreicht wird. Durch das Zusammenraffen der Plastikfolie werden ausreichende Zahlen an Kontaktpunkten und ausreichend große Flächeneinheiten untereinander während des Vorformens verbunden und eine homogene Struktur wird erreicht. Die Folie wird somit in einer breiten Zone plastisch verformt und es entsteht eine stabile, spannungsentlastete bzw. resistente Einschnürung. Die Horizontale mittig zu dieser Einschnürung unterliegt keiner kritischen seitlichen Zugspannung mehr. Daher kann hier im dritten Arbeitsvorgang im Bereich der zuvor genannten Horizontalen das Abtrennen des vollen Beutels vom Schlauch unter Plastifizierung entlang der schmalen Schnittlinie innerhalb des im zweiten Schritt hergestellten spannungsfreien Verbindungsbereichs erfolgen. Der su hergestellte Beutel weist eine dichte Naht auf, an die sich ein formstabiler Bereich anschließt, welcher gleichzeitig als Zugspannungsentlastung dient.

Durch das Ausbilden einer homogenen, vorgeformten Zone konnte das Ausgasen bzw. Ausreißen des Beutels im weiteren Verfahren vermieden werden. Zusätzlich dient diese Zone als Zugspannungsentlastung im dritten Schritt. Durch die Plastifizierung im dritten Schritt wird vorteilhafterweise in der Zone befindliches, staubförmiges Material in das Beutelmaterial eingeschmolzen und ist dadurch fest innerhalb des Kunststoffgefüges eingebunden.

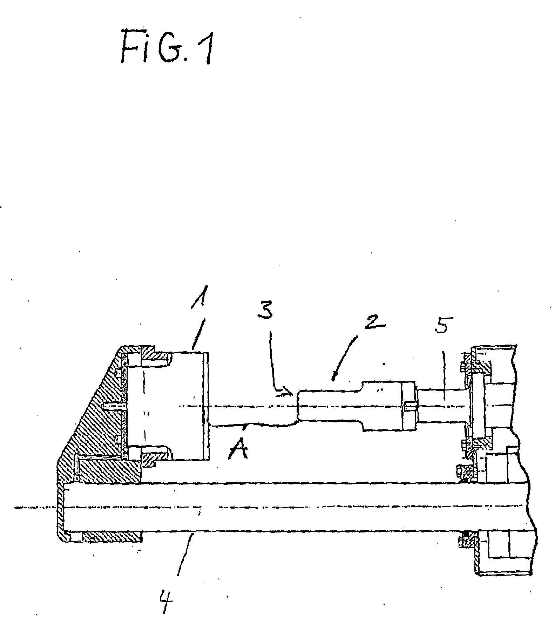

Ausführungen der Vorrichtung zur Durchführung des erfindungsgemäßen Verfahrens Fig. 1 zeigt die erfindungsgemäße Vorrichtung zum Verschließen und Abtrennen von über einen Befüllstutzen mit Gut befüllbaren, einseitig geschlossenen thermoplastischen Kunststofffolienschläuchen in einer Sonotroden-Amboss-Kombination. Hierbei ist der Amboss oder Druckstempel 1 als Wiederlager zur Ultraschall-Sonotrode 2 ausgebildet. In den Zwischenraum A zwischen Druckstempel 1 und Sonotrode 2 kann der über einen Befüllstutzen (nicht dargestellt) mit Gut befüllbare Kunststofffolienschlauch (nicht dargestellt) eingeschoben werden. Durch das Gegeneinandcr-Verfahren von Druckstempel 1 und Sonotrode 2 wird das offene Ende des Beutels - nach vorheriger Raffung - zunächst vorgeformt und dabei ein zugspannungs-entlastender Verschlussbereich erzeugt. Anschließend wird unter weiterer Wärmezufuhr im zugspannung-entlasteten Verschfussbereihr der thermoplastische Kunststoff des Schlauches plastifiziert, z.B. durch Ultraschallschweißen, wobei der Beutel versiegelt und durch entsprechenden Druck abgetrennt wird. Vorzugsweise hat der Druckstempel 1 gemäß Anspruch 16 Mittel zur Temperaturregelung. Des weiteren ist von Vorteil, wenn die Sonotrode eine Trennleiste 3 als separate Baugruppe aufweist.

In einer einfachen Ausführungsform weist eine erfindungsgemäße Vorrichtung zur Druchführung des Verfahrens eine Sonotrode mit Trennleiste und ein als Druckstempel ausgeführtes Widerlager auf. Die Bezeichnung Druckstempel bezieht sich hierbei auf ein Widerlager mit Mitteln zur Druckbeaufschlagung. Hierbei zeigt das Widerlager ein negatives Abbild der Sonotrodenfläche mit Trennleiste, d. h., dass das Widerlager an der Position der Trennleiste eine Aussparung aufweist. Zur Durchführung des zweiten Schrittes werden Sonotrode und Widerlager auf gegenüberliegenden Seiten des gerafften Beutelsegments aufgesetzt Anschließend werden Anpressdruck des Widerlagers auf die Sonotrode und Energiezufuhr zur Sonotrode so gewählt, dass der Erweichungsbereich des Materials erreicht wird, aber kein plastifizierter Zustand des Kunststoffs vorliegt. Das thermoplastische Beutelmaterial bildet nun im gesamten Bereich der aufgepressten Sonotrode zugentlastende Verbindungen aus. Nach dem Ausbilden der zugentlastenden Zone kann im dritten Schritt das Widerlager gegen eine plane Platte ausgetauscht werden. Hier setzt nun die Trennkannte auf einer glatten Fläche auf, was im Folgenden als ,Sonotroden-Amboss-Kombination' bezeichnet wird. Räumliche Gestaltung der Trennkannte, Leistungsaufnahme der Sonotrode sowie Anpressdruck der Sonotroden-Amboss-Kombination beeinflussen die Größe der Zone, in der die vollständige Plastifizierung des Kunststoffs stattfindet. Bei einer symmetrisch gestalteten Trennkannte erfolgt die Abtrennung des befüllten Beutels mittig zum plastifizierten Bereich. Dies ist mit dem Vorteil verbunden, dass sowohl der befüllte Beutel als auch das untere Ende des nachfolgenden Beutels einen Verschluss gleicher Qualität aufweisen.

Alternativ kann das erfindungsgemäße Verfahren auch durch Wechsel des Sonotrodenkopfes bei fest vorgegebenem Widerlager mit Trennkannte oder mit austauschbaren Sonotrodenköpfen und Widerlagern in entsprechenden Vorrichtungen ausgeführt werden.

In einer weiteren Ausführungsform weist eine erfindungsgemäße Vorrichtung zur Durchführung des Verfahrens zwei manuell auf das Beutelsegment aufzusetzende Heißpressplatten auf. Hier wird eine Heißpressplatte wie ein Stempel mit mechanischer Klemmspannung gegen die andere Heißpressplatte gepresst, die die Funktion eines Widerlagers hat. Die Temperatur der Heißpressplafiten wird in Abhängigkeit der Kunststoffsorte so gewählt, dass der Erweichungsbereich des Materials erreicht wird. Dadurch wird der Kunststoff verformt und es resultiert eine stabile, zugspannungsentlastende Einschnürung. Nach der Vorformung wird eine der Heißpressplatten entfernt. Innerhalb der ausgebildeten, zugspannungsfreien Zone wird anschließend eine Sonotrode mit Trennleiste aufgesetzt. Mit dieser Sonotroden-Amboss-Kombination wird die Trennung unter Plastifizierung des Kunststoffes und gleichzeitiger Druckbeaufschlagung durchgeführt. Das unter dem Befüllstutzen verbleibende, verschlossene Ende bildet den Boden des nächsten Beutels, der vorteilhafterweise ebenso zugspannungsentlastet versiegelt ist und nun zur weiteren Befüllung nur noch auf das Bodenniveau des nächsten Beutels gezogen werden muss.

Bei der Verarbeitung von Gütern mit erhöhtem Gewicht ist eine Raffung, welche den plastisch zu verformenden Bereich vertikal zugentlastet - z. B. durch mechanische Klemmung - von Vorteil, da dann während des Trennvorgangs ein unkontrolliertes Abreißen entlang der Schweißnaht durch eine Setzbewegung des befüllten Beutels nicht mehr möglich ist. Vorteilhafterweise kann diese Raffung mit Hilfe bekannter Methoden wie Draht-Plastik-Klemmen oder Kabelbindern durchgeführt werden. Außerdem kann die Folie im zu verformenden Bereich zusätzlich verdrillt werden, sodass eine größere Anzahl an Kontaktpunkten während des plastischen Vorformens gewährleistet wird, was mit einer formstabileren, zugspannungsentlastenden Zone einhergeht. Für Güter mit hoher Schüttdichte werden dickere, stabilere Beutel verwendet. In solchen Fällen wird der Beutel bzw, Schlauch aus einem hochschmelzendem, wahlweise sogar temperaturbeständigem Kunststoff hergestellt und auf der Innenseite mit einem niedrig schmelzendem thermoplastischem Kunststoff beschichtet. Ist die Länge eines Beutelsegments konstant, so kann der Verbrauch an niedrig schmelzendem Thermoplast durch lokal begrenzte Beschichtung im Bereich der zu erzeugenden Zugspannungsentlastung kostengünstig verringert werden. Bei Schläuchen aus nicht thermoplastischem Material muss die Sonotrode mit einer mechanischen, scharfen Trennleiste versehen werden. Handelt es sich bei dem abgefüllten Gut um ein Produkt mit hoher Wertschöpfung oder nennenswerter, thermischer Instabilität, so ist ein Einschmelzen bzw. Erwärmen von Partikeln zu vermeiden.

Bei einer digital gesteuerten Ausführungsform der Vorrichtung können Personalkosten durch maschinelles Raffen des Beutels - z. B. durch Evakuieren der Luft - und kontrolliertes Verformen sowie Trennen gesenkt werden. In einem Gestell montierte, druckbeaufschlagte Platten bzw. Sonotrodenköpfe erlauben deutlich höhere Drücke. Dies bietet den Vorteil, dass die zur plastischen Verformung des Thermoplasten benötigte Temperatur im kunststoffspezifischen Verarbeitungsbereich in reziproker Abhängigkeit des Druckes gesenkt werden kann. Günstigstenfalls zeigt der Thermoplast bei hoher Druckbeaufschlagung bereits Fließverhalten bei Raumtemperatur und macht ohne weitere Temperaturerhöhung eine formstabile, zugentlastende Zone zugänglich. Dies erlaubt das Verarbeiten von Gütern, die oberhalb der Raumtemperatur instabil, toxisch und gegebenenfalls sogar explosibel werden könnten.

In einer weiteren Ausführungsform umfasst eine Vorrichtung zur Durchführung des erfindungsgemäßen Verfahrens mindestens zwei mehrfach segmentierte Greifelemente mit Drucksensoren, die den Schlauch nach einer optionalen Entstaubung in Abhängigkeit von Beutelgröße und Folienstärke zusammenraffen, bis der Druck einen materialspezifischen Sollwert erreicht hat. Die einzelnen Segmente der Greifelemente werden separat mit variiertem Druck beaufschlagt, so dass außerhalb des gerafften Beutelbereichs keine Verformungen in dem Schlauchmaterial auftreten, insbesondere keine Verformungen, die oberhalb der Belastungsgrenzen des Beutelmaterials liegt. Dadurch entsteht eine vertikale Zugentlastung im Verbindungsbereich. Die Greifelemente sind um den Mittelpunkt des Beutelquerschnitts schwenkbar gelagert, was ein Verdrillen des zu bearbeitenden Bereichs möglich macht. Stempel und Widerlager der Pressvorrichtung bestehen gleichfalls aus mehreren, lokal in ihrer Energieaufnahme regelbaren Sonotroden bzw. Baugruppen, welche konzentrisch zum Mittelpunkt des Beutelquerschnitts unter Aufbringen eines materialspezifischen Druckgradienten maschinell eingefahren werden. Druck- und Temperaturgradient können auf Beutelmaterial und Verteilung des Thermoplasten abgestimmt werden, um ein optimales Ergebnis zu erzielen. Die Siegelleiste umfasst neben lokalen Thermoelementen Sonotroden mit auswechselbarem Sonotrodenkopf, sodass Sonotrodenlelstung, -amplitude und wahlweise auch -frequenz dem Material angepasst werden können. Hier erlauben entsprechend ausgeformte Sonotroden und passende Widerlager neben dem Verschweißen das Erzeugen zusätzlich stabilisierender Konturleisten sowie Nietpunkten. Es ist vorgesehen, dass die Ultraschallplastifizierung eine Ausformung von den Verschluss stabilisierenden Versteifungsmitteln umfasst.

Vorzugsweise ist die Trennleiste gleichfalls als Sonotrode mit lokalen Thermoelementen und auswechselbarem Sonotrodenkopf sowie versenkbarem scharfen Trennrand ausgeführt, damit auch Kunststoffbeutel aus thermostabilem Material abgetrennt werden können. In dieser Ausführungsform kann die erfindungsgemäße Vorrichtung in Anlagen mit häufig wechselnden Schlauchgrößen und -materialien den jeweiligen stoff- und produktspezifischen Vorgaben durch einfachen Wechsel des digitalen Programms angepasst werden. Als Beispiel für einen auswechselbaren Sonotrodenkopf mit scharfem Trennrand in Form einer Trennleiste 3 ist in Fig. 1 die Verschließ- und Trennvorrichtung für Kunststoffbeutel mit verstellbarer Unterwelle 4 dargestellt. Bei wechselnden Beutelgrößen kann der Abstand A mittels verstellbarer Oberwelle 5 passend eingestellt werden. Die Schließ- und Trennbewegung erfolgt über die horizontale Bewegung der Unterwelle 4, wobei der Druckstempel 1 gegen die Trennleiste 3 gefahren wird.

## Patentansprüche

1. Verfahren zum Verschließen von einseitig geschlossenen, mit staubförmigem, sensibelem Gut befüllten Kunststofffolienschläuchen, wobei zumindest das offene Ende mindestens auf der Innenseite eine umlautende Beschichtung aus thermoplastischem Kunststoff aufweist, um daraus einen Beutel herzustellen, **dadurch gekennzeichnet, dass** zunächst das offene Ende des Schlauches zu einem locker liegenden Verschlussbereich gerafft wird, dass anschließend eine Vorformung im Bereich der Raffung unter Erweichung des thermoplastischen Kunststoffes durch Heißpressen erfolgt, wobei mindestens ein formstabiler, zugspannungsentlastender Verschlussbereich erzeugt wird, und dass im zugspannungsentlasteten Verschlussbereich unter Plastifizierung des thermoplastischen Kunststoffs entlang einer Trennlinie durch Ultraschallschweißen der Beutel versiegelt und abschließend abgetrennt wird, wobei durch die Plastifizierung dort befindliches, staubförmiges Material eingeschmolzen und fest innerhalb des Kunststoffgefüges eingebunden wird.

2. Verfahren zum Verschließen von einseitig geschlossenen, mit staubförmigem, sensibelem Gut befüllten Kunststofffolienschläuchen, wobei zumindest das offene Ende mindestens auf der Innenseite eine umlaufende Beschichtung aus thermoplastischem Kunststoff aufweist, um daraus einen Beutel herzustellen, **dadurch gekennzeichnet, dass** zunächst das offene Ende des Schlauches zu einem locker liegenden Verschlussbereich gerafft wird,
dass anschließend durch Vorformung im Bereich der Raffung unter Erweichung des thermoplastischen Kunststoffes mittels Ultraschall mindestens ein formstabiler, zugspannungsentlastender Verschlussbereich erzeugt wird, und dass im zugspannungsentlasteten Verschlussbereich unter Plastifizierung des thermoplastischen Kunststoffs entlang einer Trennlinie durch Ultraschallschweißen der Beutel versiegelt und abschließend abgetrennt wird, wobei durch die Plastifizierung dort befindliches, staubförmiges Material eingeschmolzen und fest innerhalb des Kunststoffgefüges eingebunden wird.

3. Verfahren nach Anspruch 1, **dadurch gekennzeichnet, dass** das Raffen des Beutels durch seitlich aufgebrachten Druck erfolgt, dessen Größe in Abhängigkeit von der Foliendicke und der Beutelgröße eingestellt wird.

4. Verfahren nach einem der vorhergehenden Ansprüche, **dadurch gekennzeichnet, dass** das Raffen in zugentlastender Weise durchgeführt wird.

5. Verfahren nach Anspruch 3, **dadurch gekennzeichnet, dass** zur Zugentlastung während der Raffung außerhalb des Raffbereichs zumindest während des Verfahrens das Beutelmaterial durch eine konzentrisch eingeengte Vorrichtung, vorzugsweise einen Kabelbinder, gehalten wird.

6. Verfahren nach einem der vorhergehenden Ansprüche, **dadurch gekennzeichnet, dass** das Raffen eine gleichzeitige Verdrillung umfasst.

7. Verfahren nach einem der vorhergehenden Ansprüche, **dadurch gekennzeichnet, dass** das Raffen mit lokal variierter Raffkraft durchgeführt wird.

8. Verfahren nach einem der vorhergehenden Ansprüche, **dadurch gekennzeichnet, dass** das Raffen durch Anlegen eines Vakuums an das offene Ende Schlauchs erfolgt.

9. Verfahren nach einem der vorhergehenden Ansprüche, **dadurch gekennzeichnet, dass** die Vorformung mit lokal variiertem Druck durchgeführt wird.

10. Verfahren nach einem der vorhergehenden Ansprüche, **dadurch gekennzeichnet, dass** die Vorformung mit ansteigender Temperatur erfolgt.

11. Verfahren nach einem der vorhergehenden Ansprüche, **dadurch gekennzeichnet, dass** die Verformung nach einem zonal geregelten Temperatur- und Druckprofil erfolgt.

12. Verfahren nach einem der vorhergehenden Ansprüche, **dadurch gekennzeichnet, dass** plastifizieren und Abtrennen des Beutels an einer Stelle der zugspannungsentlasteten Zone durchgeführt wird, die einen Abstand von mindestens 2 mm vom nicht vorgeformten Beutelmaterial aufweist.

13. Verfahren nach einem der vorhergehenden Ansprüche, **dadurch gekennzeichnet, dass** eine Ultraschallplaslifizierung mit variierten Parametern, vorzugsweise variierter Amplitude, durchgeführt wird.

14. Verfahren nach einem der vorhergehenden Ansprüche, **dadurch gekennzeichnet, dass** die Ultraschallplastifizierung eine Ausformung von den Verschluss stabilisierenden Versteifungsmitteln umfasst.

15. Vorrichtung zum Verschließen von einseitig geschlossenen, mit staubförmigem Gut befüllten Kunststofffolienschläuchen, deren offenes Ende mindestens auf der Beutelinnenseite mindestens eine Beschichtung aus thermoplastischem Kunststoff aufweist, **dadurch gekennzeichnet, dass** die Vorrichtung mindestens einen Druckstempel (1) und mindestens eine Ultraschall-Sonotrode (2) umfasst, die gegeneinander verfahrbar sind, wobei Halteelemente für das offene Beutelende sowie Mittel zur Raffung und Druckbeaufschlagung im Bereich zwischen Druckstempel (1) und Sonotrode (2) angeordnet sind, wobei der Druckstempel ein negatives Abbild der Sonotrodenfläche aufweist, dass Druckstempel und/oder Ultraschall-Sonotrode (2) eine austauschbare Oberfläche aufweisen, dass die Vorrichtung mindestens eine Sonotroden-Amboss-Kombination umfasst, wobei die Sonotroden-Amboss-Kombination durch Austausch der Oberfläche des Druckstempels (1) und/oder der Ultraschall-Sonotrode(2) erhältlich ist.

16. Vorrichtung nach Anspruch 15, **dadurch gekennzeichnet, dass** mindestens ein Druckstempel (1) Mittel zur Temperaturregelung aufweist.

17. Vorrichtung nach einem der Ansprüche 15 bis 16, **dadurch gekennzeichnet, dass** die Sonotrode (2) eine Trennleiste (3) als separate Baugruppe umfasst.

18. Vorrichtung nach einem der Ansprüche 15 bis 17, **dadurch gekennzeichnet, dass** die Sonotrode Mittel zur Temperaturregelung aufweist.

19. Vorrichtung nach einem der Ansprüche 14 bis 17, **dadurch gekennzeichnet, dass** Druckstempel, Trennleiste und Sonotrode separate Widerlager aufweisen, die jeweils gegen das geraffte Beutelsegment anpressbar sind.

20. Vorrichtung nach einem der Ansprüche 14 bis 18, **dadurch gekennzeichnet, dass** die Druckstempel Mittel zur kontrollierten Druckbeaufschlagung aufweisen.

21. Vorrichtung nach einem der Ansprüche 14 bis 20, **dadurch gekennzeichnet, dass** die Widerlager Mittel zur lokalen Temperaturregulierung aufweisen.

22. Vorrichtung zum Verschließen und Abtrennen von uber einen Befüllstutzen mit Gut befüllbaren, einseitig geschlossenen, thermoplastischen Kunststofffolienschläuchen, deren offenes Ende zusammen mit einem Schlauchvorrat oberhalb des Befüllstutzens fixiert ist, **dadurch gekennzeichnet, dass** die Vorrichtung mindestens zwei gegenüberliegend, seitlich am offenen Schlauchende angeordnete Formteile, von denen mindestens eines als Sonotrode (2) ausgebildet Ist, von denen weiterhin mindestens ein Formteil eine austauschbare Oberfläche aufweist, mit Mitteln zur Druckbeaufschlagung, und mindestens eine Sonotroden-Amboss-Kombination umfasst, wobei die Sonotroden-Amboss-Kombination durch Austausch der Oberfläche eines Formteils erhältlich ist.
